# EUROPEAN PATENT APPLICATION

(11) **EP 3 070 523 A1**
(43) Date of publication of application: **21.09.2016**
(21) Application number: 13897374.8
(22) Date of filing: 27.12.2013
(51) Int. Cl.: G03B 15/07, G03B 15/03

(54) **SNAP-FITTING DEVICE FOR SOFTBOX**

(30) Priority: 14.11.2013 CN 201320719239 U
(71) Applicant: Godox Photo Equipment Co., Ltd., Shenzhen, Guangdong 518000 (CN)
(72) Inventor: ZENG, Weijun, Shenzhen, Guangdong 518000 (CN)
(74) Representative: Office Kirkpatrick
(86) International application number: PCT/CN2013/090673
(87) International publication number: WO 2015/070505

(57) **Abstract**

Provided is a snap-fitting device for a softbox, comprising: a casing, on which a supporting member (6), a snap-fitting member and a light passage hole (4) are formed. The light passage hole (4) is a cylindrical hole and a flash lamp cap fixing device is formed therein. The flash lamp cap fixing device comprises a supporting platform (8) and a pressing plate (7) opposite to the supporting platform (8) and having an adjustable position relative to the supporting platform (8). The snap-fitting device for a softbox enables an on-camera flash lamp to use both an on-camera flash lamp folded softbox and a strobe flash lamp softbox, reducing expenses for a user.

## Description

### Technical Field

The present application relates to a snap-fitting device for softbox with a top flash lamp cap fixing portion, and it belongs to the field of photography equipment.

### Background

The flash lamp softbox on the top of a camera is a common auxiliary photography equipment, and it is widely employed. In the prior art, the softbox usually consists of a reflector and a chuck. The softbox and flash lamp are typically fixed and connected with a clamping component, and after a long period of application and development in this field, there are now generally two basic types of clamping components; one is named as clamping holder type, and the other is referred to chuck type. With respect to the clamping holder type, it contains a bayonet socket on the top. A photo studio flash lamp softbox for matching various types of bayonet sockets can enable the flash lamp on the top to employ the photo studio flash lamp softbox by means of this bayonet socket. Regarding the type of chuck, it contains a discoid ring on the top, it can connect to the foldable softbox designed specifically for the market available top flash lamp by means of a chuck. The problem arising in the prior art includes different elements. Either the existing chuck or the existing clamping holder connects to the flash lamp by means of an L shaped component with a joint or hinge, and it is connected to the body of the flash lamp, the angle of the clamping holder or the chuck can be regulated independently, its position can be adjusted forward and backward, leftward and right word or the like by means of the joint or hinge, so the top flash lamp cap can be fitted into the light transmitting hole of the chuck or clamping holder to play the role of the softbox. In order to achieve this result, however, some certain adjustment must be done, and it is always very trouble. On the other hand, the existing clamping holder and chuck with an L shaped component often have a large volume, not easy to carry them. Further, the installation of the top flash lamp may be effected by the L shaped component, sometimes the connection between the cap portion of the top flash lamp and the softbox is not very good, and accordingly there is a bad effect on the practical application of light effect. At last, in order to let the top flash lamp be fixed and move all around, the L shaped component is often made of metallic material, as a result the processing of this component is complex, and needs more manpower to handle, so the cost is very high. In summary, it is desirable to improve the existing techniques.

### Summary

The object of the present application is to provide a softbox snap-fitting device with a top flash lamp cap fixing portion, so as to overcome the technical problems in the prior art.

The softbox snap-fitting device with a top flash lamp cap fixing portion according to the present application comprises a casing, the casing having a supporting component, a clamping component and a light transmitting hole formed thereon, the light transmitting hole having a shape of column hole, wherein the light transmitting hole of column hole shape has a flash lamp cap fixing structure formed therein. The flash lamp cap fixing structure comprises a supporting platform and a pressboard against the supporting platform, and the position of the pressboard can be adjusted relative to the position of the supporting platform.

In a preferable embodiment, the softbox snap-fitting device further comprises a regulating bolt, wherein the regulating bolt is in thread fit with the case having the light transmitting hole, and the position of the pressboard relative to the supporting platform is defined by the tip of the regulating bolt.

In a preferable embodiment, the light transmitting hole has a shape of square corresponding to the shape of the flash lamp cap.

Preferably, the clamping component comprises an annular column hole connected to the front end of the light transmitting hole, wherein the annular column hole has a certain number of clamping slot peripherally, the clamping slot has a shape of L, and it consists of an axial groove and a radial groove. More preferably, the axis of the annular column hole coincides with the central line of the light transmitting hole.

In a preferable embodiment, there is an annular disc arranged radially around the annular column hole.

According to another preferable embodiment, the clamping component comprises an annular disc connected peripherally to the front end of the light transmitting hole.

More preferably, the supporting component is a hinged bar or a jointed component.

The softbox snap-fitting device with a top flash lamp cap fixing portion according to the present application has a flash lamp cap fixing structure in the light transmitting hole. By means of fixing the flash lamp cap, the connection between the flash lamp and the snap-fitting device is achieved. Compared with the existing techniques, the technical problem of having to adjust the adaptability between the angle and position of the flash lamp cap and the snap-fitting device is solved by this kind of fixed connection, facilitating the convenience of use. At the same time, the technical solution of the present application avoids using the L shaped component for the existing products, so as to significantly reduce its volume, and it is to carry. Further, because of excluding the L shaped component, the whole product can be made of plastic using injection molding, then the installation can be easily completed, reducing the processing manpower and the cost enormously. On the other hand, by means of the present technical solution, the fitting position of the top flash lamp cap and the softbox can be readily adjusted back and forth, meanwhile it can make sure the center of the top flash lamp cap always located on the central line of the light transmitting hole, so as to realize the ideal light effect, which cannot be achieved by the two kinds of clamping components in the prior art. According to a preferable embodiment, the present application has an annular disc structure, actually it combines the structures of chuck and clamping holder, which enable the top flash lamp to use the top flash lamp foldable softbox and photo studio flash lamp softbox simultaneously. So as to integrate these two types of clamping components of the prior art, accordingly the expenditure is saved, obviously the object of the present application is achieved.

### Brief Description of the Drawings

Figure 1 is a schematic diagram of a softbox snap-fitting device with a top flash lamp cap fixing portion according to a preferable embodiment of the preset application.
Figure 2 is a schematic diagram of a softbox snap-fitting device with a top flash lamp cap fixing portion according to a preferable embodiment of the preset application in another visual angle different that of Figure 1.

In the Drawings:
- 1: annular column hole;
- 2: clamping slot;
- 21: axial groove;
- 22: radial groove;
- 3: chuck;
- 4: light transmitting hole;
- 5: axial locating end face;
- 6: supporting component;
- 7: pressboard;
- 8: supporting platform;
- 9: regulating bolt.

### Detailed Description of the Invention

The present application will be further described by illustrating the present technical solution with reference to the softbox snap-fitting device with a top flash lamp cap fixing portion according to a preferable embodiment of the preset application and the accompanying figures.

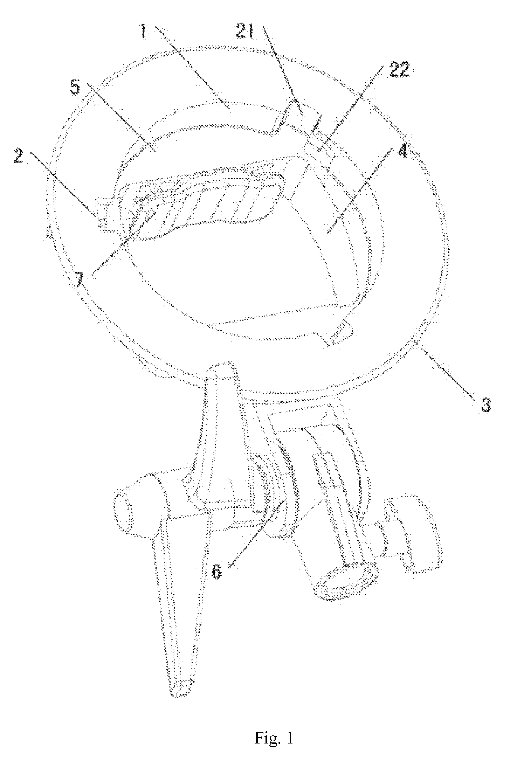

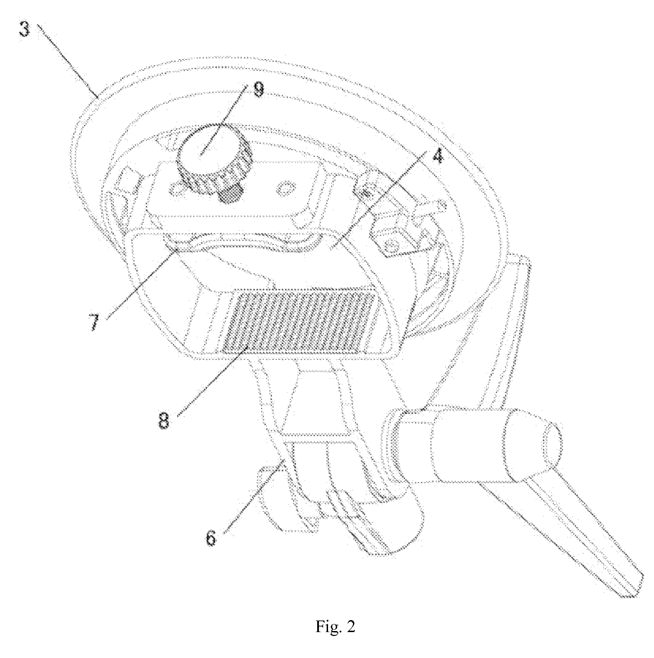

The preferable embodiments of the present application provides a softbox snap-fitting device with a top flash lamp cap fixing portion, as shown in Figures 1 and 2. It comprises a casing, the casing having a supporting component 6, a clamping component and a light transmitting hole 4 formed thereon, the light transmitting hole 4 having a shape of column hole, wherein the light transmitting hole of column hole 4 has a flash lamp cap fixing structure formed therein. The flash lamp cap fixing structure comprises a supporting platform 8 and a pressboard 7 against the supporting platform 8, and the position of the pressboard 7 is adjustable relative to the position of the supporting platform 8.

In a preferable embodiment, the softbox snap-fitting device further comprises a regulating bolt 9, wherein the regulating bolt 9 is in thread fit with the case having the light transmitting hole 4, and the position of the pressboard 7 relative to the supporting platform 8 is defined by the tip of the regulating bolt 9.

In a preferable embodiment, the light transmitting hole 4 has a shape of square corresponding to that of the flash lamp cap.

According to a preferable embodiment, the clamping component comprises an annular column hole 1 connected to the front end of the light transmitting hole 4, wherein the annular column hole 1 has a certain number of clamping slots 2 peripherally, the clamping slot 2 has an L shape, it consists of an axial groove 21 and a radial groove 22. More preferably, the axis of the annular column hole 1 coincides with the central line of the light transmitting hole 4.

As a further improvement to the fore-mentioned preferable embodiment, there is an annular disc arranged around the annular column hole radially, and the supporting component is a hinged bar or a jointed component.

It should be appreciated that, there is only one annular disc formed on the perimeter of the front end of the light transmitting hole 4, it is also an implementation of the present application, it is in accordance with the main point of and the structure features of the present application.

In summary, the softbox snap-fitting device with a top flash lamp cap fixing portion according to the present application comprises a casing. The casing has a supporting component, a clamping component and a light transmitting hole formed thereon, the light transmitting hole having a shape of column hole, wherein the light transmitting hole of column hole shape has a flash lamp cap fixing structure formed therein. The flash lamp cap fixing structure comprises a supporting platform and a pressboard against the supporting platform, and the position of the pressboard can be adjusted relative to the position of the supporting platform. The present technical solution increases the convenience of employment, and spread the application scope of the top flash lamp.

The above is only the detailed description of the present application. However, the protection scope of the present application is not limited to this. Those skilled in the art can readily contemplate to change or replacement within the technical scope of the present disclosure, and this change or replacement shall fall within the protection scope of the present application, which is defined by the claims.

## Claims

1. A softbox snap-fitting device with a top flash lamp cap fixing portion comprising a casing, the casing having a supporting component (6), a clamping component and a light transmitting hole (4) formed thereon, the light transmitting hole (4) having a shape of column (1), wherein the light transmitting hole of column shape has a flash lamp cap fixing structure formed therein, the flash lamp cap fixing structure comprises a supporting platform (8) and a pressboard (7) against the supporting platform (8), and the position of the pressboard (7) is adjustable relative to that of the supporting platform (8).

2. The softbox snap-fitting device with a top flash lamp cap fixing portion of claim 1, wherein the softbox snap-fitting device further comprises a regulating bolt (9), the regulating bolt (9) being in thread fit with the case having the light transmitting hole (4), and the position of the pressboard (7) relative to the supporting platform (8) is defined by means of adjusting the tip of the regulating bolt (9).

3. The softbox snap-fitting device with a top flash lamp cap fixing portion of claim 1, wherein the light transmitting hole (4) has a shape of square corresponding to that of the flash lamp cap.

4. The softbox snap-fitting device with a top flash lamp cap fixing portion of claim 1, wherein the clamping component comprises an annular column hole (1) connected to the front end of the light transmitting hole (4), the annular column hole (1) having a certain number of clamping slots (2) peripherally, each of the clamping slots (2) having a shape of L and consisting of an axial groove (21) and a radial groove (22), the axis of the annular column hole (1) coinciding with the central line of the light transmitting hole (4).

5. The softbox snap-fitting device with a top flash lamp cap fixing portion of claim 4, wherein there is an annular disc formed radially around the annular column hole (1).

6. The softbox snap-fitting device with a top flash lamp cap fixing portion of claim 1, wherein the clamping component comprises an annular disc connected peripherally to the front end of the light transmitting hole (4).

7. The softbox snap-fitting device with a top flash lamp cap fixing portion of claim 1, wherein the supporting component (6) is a hinged bar or a jointed component.
